(19) Europäisches Patentamt
European Patent Office
Office européen des brevets

(11) **EP 4 496 068 A1**

(12) **EUROPEAN PATENT APPLICATION**
published in accordance with Art. 153(4) EPC

(43) Date of publication:
**22.01.2025 Bulletin 2025/04**

(21) Application number: 23796255.0

(22) Date of filing: **21.04.2023**

(51) International Patent Classification (IPC):
$H01M\ 10/06$ (2006.01)    $H01M\ 4/14$ (2006.01)
$H01M\ 4/62$ (2006.01)    $H01M\ 4/68$ (2006.01)
$H01M\ 10/12$ (2006.01)

(52) Cooperative Patent Classification (CPC):
**H01M 4/14; H01M 4/62; H01M 4/68; H01M 10/06;
H01M 10/12; Y02E 60/10; Y02P 70/50**

(86) International application number:
**PCT/JP2023/015844**

(87) International publication number:
**WO 2023/210513 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.04.2022 JP 2022072544**

(71) Applicant: **GS Yuasa International Ltd.
Kisshoin, Minami-ku,
Kyoto-shi, Kyoto 601-8520 (JP)**

(72) Inventor: **HAMANO, Yasuyuki
Kyoto-shi, Kyoto 601-8520 (JP)**

(74) Representative: **Isarpatent
Patent- und Rechtsanwälte
Barth Hassa Peckmann & Partner mbB
Friedrichstraße 31
80801 München (DE)**

(54) **LEAD-ACID BATTERY AND METHOD FOR MANUFACTURING SAME, AND METHOD FOR USE THEREOF**

(57) A lead-acid battery includes: a positive electrode; a negative electrode; and an electrolyte solution. The positive electrode includes a positive current collector and a positive electrode material. The negative electrode includes a negative current collector and a negative electrode material. The positive electrode material contains lead dioxide. The electrolyte solution contains water and sulfuric acid. A content of lead dioxide in the positive electrode material is 70% by mass or more and 82% by mass or less in a virtual full charge state where the lead-acid battery is assumed to be in a full charge state (100%).

Fig. 1

EP 4 496 068 A1

**Description**

TECHNICAL FIELD

The present invention relates to a lead-acid battery.

BACKGROUND ART

Lead-acid batteries are in use for various applications, including automotive and industrial applications. The lead-acid batteries include a negative electrode plate, a positive electrode plate, a separator (or mat), and an electrolyte solution and the like. Each plate includes a current collector and an electrode material.

Patent Document 1 proposes a positive current collector for a lead-acid battery containing a carbonaceous material at least on a surface thereof.

Patent Document 2 proposes a method for producing a lead-acid battery in which an electrolyte solution is extracted after formation of a container, and a vent valve is attached, wherein 80% by mass or more of lead dioxide ($PbO_2$) is present in a positive active material after the formation.

Patent Document 3 proposes a lead-acid battery including a positive electrode plate, a negative electrode plate, and an electrolyte solution, wherein the negative electrode plate includes a negative electrode material, the negative electrode material contains a carbon material and an organic expander, when an external specific surface area of the carbon material is represented by S $m^2/g$ and a content of the carbon material in the negative electrode material is represented by Ccn% by mass, a content Ce (% by mass) of the organic expander in the negative electrode material satisfies the following Formula (1): $(f(S \cdot Ccn) + 0.10) \leq Ce \leq (f(S \cdot Ccn) + 0.25)$, $f(S \cdot Ccn)$ satisfies the following Formula (2): $(-7.3 \times 10^{-7} \times S2 + 0.0010 \times S) \times Ccn \leq f(S \cdot Ccn) \leq (-8.0 \times 10^{-7} \times S2 + 0.0011 \times S + 0.070) \times Ccn$, and the external specific surface area S of the carbon material is 1.5 $m^2/g$ or more and 680 $m^2/g$ or less.

Patent Document 4 proposes a lead-acid battery including: a container including a cell chamber and an opened upper surface; an element and an electrolyte solution stored in the cell chamber; and a lid closing the opening, wherein the element includes a negative electrode and a positive electrode, and the negative electrode contains a negative active material containing a Pb component, lignin sulfonic acid and/or a salt thereof, and a carbon material having a specific surface area of 10.0 $m^2/g$ or less.

Patent Document 5 proposes a sealed lead-acid battery produced by a so-called container formation method in which a battery is produced using unformed positive and negative electrode plates, and then a predetermined diluted sulfuric acid is injected into the battery, followed by charging to form the element in a container, wherein a negative active material to which a fatty acid or a salt thereof is added together with lignin or a derivative thereof is used.

PRIOR ART DOCUMENTS

PATENT DOCUMENTS

Patent Document 1: WO 2018/155422 A
Patent Document 2: JP-A-2004-171983
Patent Document 3: JP-A-2020-102359
Patent Document 4: WO 2019/77657 A
Patent Document 5: JP-A-10-208746

SUMMARY OF THE INVENTION

PROBLEMS TO BE SOLVED BY THE INVENTION

The lead-acid battery is sometimes used in a poor charged state called partial state of charge (PSOC). For example, a lead-acid battery mounted on a vehicle subjected to idling stop control (also referred to as idle reduction control or start-stop system or the like) is used in PSOC. In the lead-acid battery used in PSOC, stratification tends to proceed, and thus the suppression of sulfation is often regarded as important. Meanwhile, the lead-acid battery used in PSOC is rarely charged to an overcharge or full charge state. Therefore, it has been considered that the corrosion of a positive current collector and electrolyte solution decrease due to the electrolysis of water are less likely to occur.

However, when the lead-acid battery used in PSOC is used at a high temperature of, for example, about 40°C, the corrosion of the positive current collector and the electrolyte solution decrease due to the electrolysis of water gradually proceed, and thus the durability in a charge-discharge cycle is deteriorated. Such a phenomenon has not been sufficiently addressed in the lead-acid battery used in PSOC.

Meanwhile, in recent years, various techniques for suppressing the stratification of an electrolyte solution have been proposed. As a result, the problems of the corrosion of the positive current collector and electrolyte solution decrease of the lead-acid battery used in PSOC are also gradually becoming apparent.

A main object of the present disclosure is to improve the cycle durability of a lead-acid battery used in PSOC. In another point of view, an object of the present disclosure is to improve the corrosion resistance of a positive current collector and to suppress the decrease of an electrolyte solution.

MEANS FOR SOLVING THE PROBLEMS

One aspect of the present invention relates to a lead-acid battery including: a positive electrode; a negative electrode; and an electrolyte solution. The positive electrode includes a positive current collector and a positive electrode material. The negative electrode includes a negative current collector and a negative electrode material. The positive electrode material contains lead dioxide. The electrolyte solution contains water and sulfuric acid. A content of lead dioxide in the positive electrode material is 70% by mass or more and 82% by mass or less in a virtual full charge state where the lead-acid battery is assumed to be in a full charge state.

Another aspect of the present invention relates to a method for producing a lead-acid battery. The method includes: assembling an unformed cell including a positive electrode, a negative electrode, and an electrolyte solution; and forming the unformed cell. The positive electrode includes a positive current collector and a paste-type positive electrode material. The positive electrode material contains lead dioxide. The electrolyte solution contains water and sulfuric acid. A content of lead dioxide in the positive electrode material after the forming is 70% by mass or more and 82% by mass or less.

ADVANTAGES OF THE INVENTION

An object of the present disclosure is to improve the cycle durability of a lead-acid battery used in PSOC.

BRIEF DESCRIPTION OF THE DRAWINGS

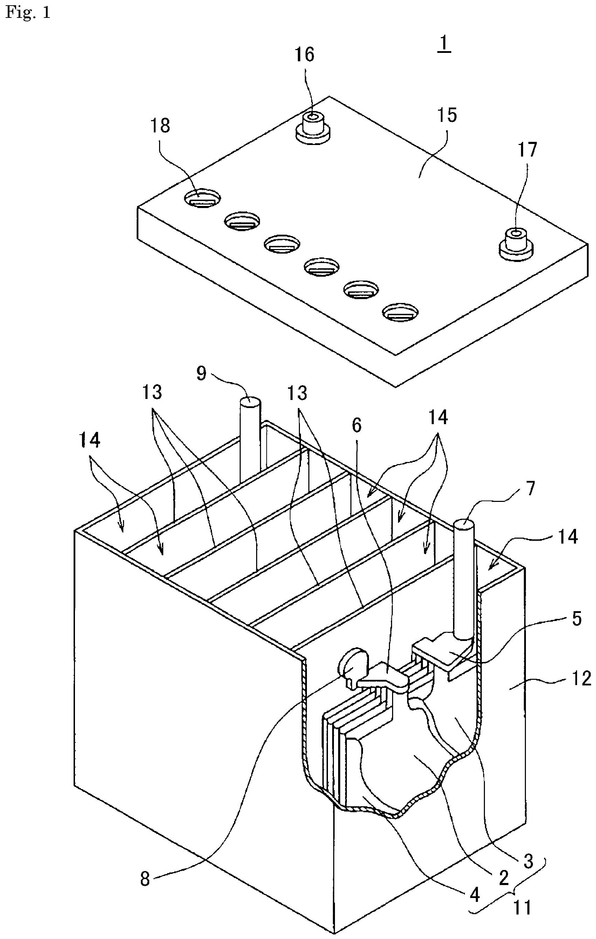

Fig. 1 is a partially cutaway exploded perspective view showing the appearance and internal structure of a lead-acid battery according to one aspect of the present invention.

MODE FOR CARRYING OUT THE INVENTION

A lead-acid battery according to an embodiment of the present invention includes a positive electrode, a negative electrode, and an electrolyte solution. The positive electrode includes a positive current collector and a positive electrode material. The negative electrode includes a negative current collector and a negative electrode material. The electrolyte solution contains water and sulfuric acid. The positive electrode material contains lead dioxide. A positive electrode of a lead-acid battery mounted on a vehicle subjected to idling stop control (controlled by idle reduction control or a start-stop system) is generally a paste-type positive electrode having a structure largely different from that of a clad type.

The positive electrode material is held by the positive current collector, and the negative electrode material is held by the negative current collector. The electrode material is obtained by removing the current collector from the plate. A member such as a mat or a pasting paper may be stuck to the plate. Such a member (also referred to as a sticking member) is used integrally with the plate and is thus assumed to be included in the plate. When the plate includes the sticking member (such as a mat or a pasting paper), the electrode material is obtained by removing the current collector and the sticking member.

The lead-acid battery may include a container that stores the element and the electrolyte solution. The element is a layered product of a positive electrode and a negative electrode, and a separator is interposed between the positive electrode and the negative electrode.

The lead-acid battery may be a flooded-type battery (vent type battery) or a valve regulated battery. The valve regulated lead-acid battery is also referred to as a valve regulated lead-acid battery (VRLA).

The application of the lead-acid battery is not limited, but in the main application, the lead-acid battery is assumed to be used in PSOC. For example, a lead-acid battery mounted on a vehicle subjected to idling stop control is used in PSOC. Since the lead-acid battery used in PSOC is often used in a poor charged state, the corrosion of the positive current collector and electrolyte solution decrease due to the electrolysis of water are considered to hardly occur.

However, actually, even in the case of a lead-acid battery used in PSOC, it has become clear that the corrosion of the positive current collector and the electrolyte solution decrease due to the electrolysis of water gradually proceed when the lead-acid battery is used at a high temperature of, for example, about 40°C, and the durability in a charge-discharge cycle is deteriorated.

Meanwhile, it has become clear that when the content of lead dioxide ($PbO_2$) in the positive electrode material is controlled to 70% by mass or more and 82% by mass or less in a virtual full charge state where the lead-acid battery is assumed to be in a full charge state, the corrosion of the positive current collector and electrolyte solution decrease of the lead-acid battery are suppressed, and the durability in a charge-discharge cycle in PSOC is remarkably improved.

In the case of a conventional lead-acid battery, it is known that the content of lead dioxide in a positive electrode material in a full charge state is generally 83 to 100%.

It is presumed that when the content of lead dioxide in the positive electrode material of the lead-acid battery in the virtual full charge state is controlled to 70 to 82%, lead sulfate tends to remain in the positive electrode material in use in PSOC, a positive electrode potential during charge-discharge is maintained to be lower, and the corrosion of the positive current collector and the electrolysis of water are suppressed. Since oxygen generation due to the electrolysis of water is suppressed, stress due to the gas generation is reduced, and the softening and falling of the positive electrode material is also suppressed. This point is also considered to contribute to improvement in cycle durability.

From the viewpoint of obtaining a high effect, the content of lead dioxide ($PbO_2$) in the positive electrode material when the lead-acid battery is in the virtual full charge state is desirably less than 80% by mass, more desirably 78% by mass or less, and still more desirably 75% by mass or less.

In the lead-acid battery, generally, stratification, in which a difference in specific gravity of the electrolyte solution (that is, the concentration difference of sulfuric acid) occurs between the upper part and the lower part of the container, is likely to occur, and this tendency is more remarkable in the lead-acid battery used in PSOC. The stratification promotes the deterioration of the negative electrode and the softening of the upper part of the positive electrode, and thus causes the deterioration of the durability in a charge-discharge cycle.

Meanwhile, in the lead-acid battery in which the stratification of the electrolyte solution is less likely to proceed, it is considered that the influence of the corrosion of the positive current collector and the electrolyte solution decrease at a temperature of about 40°C tends to increase with respect to the influence of the stratification. That is, it is considered that the effect when the content of lead dioxide in the positive electrode material of the lead-acid battery in the virtual full charge state is controlled to 70% by mass or more and 82% by mass or less is likely to become apparent in the lead-acid battery in which the stratification of the electrolyte solution is suppressed. In a state where the electrolyte solution is stratified, the effect obtained by controlling the content of lead dioxide in the positive electrode material to 70% by mass or more and 82% by mass or less is likely to be limitedly exhibited on the upper part of the positive electrode. Meanwhile, in the lead-acid battery in which the stratification of the electrolyte solution is suppressed, it is presumed that the above effect is exhibited in the entire positive electrode and is more likely to become apparent.

The present invention also includes a method for using the lead-acid battery. The method for using such a lead-acid battery includes charging and discharging the lead-acid battery mounted on a vehicle subjected to idling stop control in PSOC. In other words, the method for using a lead-acid battery according to the present invention includes controlling the charge- discharge of the lead-acid battery so that, for example, the SOC is maintained in a range of 60% or more and 90% or less while the vehicle is subjected to idling stop control.

Here, the full charge state of the lead-acid battery usually refers to a state where an actual state of charge (SOC) is 100%. Meanwhile, the content of lead dioxide ($PbO_2$) in the positive electrode material in the virtual full charge state is a calculated value obtained by calculation. When the charge state of the lead-acid battery is unknown and the charge state (X (%)) of the lead-acid battery is calculated, a state where the specific gravity of the electrolyte solution is a reference value is defined as the virtual full charge state. The charge state of the lead-acid battery used in PSOC is often unknown. Since the charge state of the lead-acid battery changes with time due to self discharge even if the lead-acid battery is not used, the charge state is often unknown.

When the specific gravity of the reference value can be known from the publication or disclosure of the manufacturer of the lead-acid battery, the specific gravity is a value published or disclosed by the manufacturer. For example, a design value of the specific gravity of an electrolyte solution in the full charge state of the lead-acid battery may be published by the manufacturer. In that case, the design value may be used as the reference value. When the manufacturer of the lead-acid battery does not publish or disclose the reference value, the specific gravity of the reference value is 1.28 at 20°C.

The charge state of the lead-acid battery changes due to its use or self discharge. Usually, the obtained lead-acid battery is not in a full charge state. Therefore, in order to determine the content of lead dioxide in the positive electrode material of the lead-acid battery in the full charge state, it is first necessary to specify the charge state of the lead-acid battery. The charge state (X (%)) of the lead-acid battery is obtained from the following Formula (1).

$$X\,(\%) = 100 \times W2/W4 \quad \dots (1)$$

W2: Amount of sulfuric acid (g) actually measured in electrolyte solution

W4: Amount of sulfuric acid (g) in electrolyte solution when specific gravity of electrolyte solution is reference value

When X = 100% is set, the lead-acid battery is in a virtual full charge state, and when X = 0% is set, the lead-acid battery is in a state where sulfuric acid of the electrolyte solution is absent. W4 is calculated from the following Formula (2), Formula (3), and literature values. Apart of the literature values (The Sulphuric Acid Association of Japan, "Sulfuric Acid Handbook Revised Second Edition" (issued on December 12, 2012)) are shown in Table 1. The specific gravity is a ratio to the density of water at 4°C (0.99997 g/cm$^3$). Due to the charge reaction of the lead-acid battery, the amount of sulfuric acid increases by 3.659 g and the amount of water decreases by 0.672 g per 1Ah of the quantity of electricity.
Sulfuric acid:

$$W4 = W2 + 3.659y \quad \dots (2)$$

Water:

$$W5 = W3 - 0.672y \quad \dots (3)$$

y: Quantity of electricity (Ah) during charging from charge state x (%) to full charge state
W3: Amount (g) of water actually measured in electrolyte solution
W5: Amount (g) of water in electrolyte solution when specific gravity of electrolyte solution is reference value

[Table 1]

| Concentration of sulfuric acid (% by mass) | Specific gravity (20°C/4°C) |
|---|---|
| 5 | 1.0317 |
| 10 | 1.0661 |
| 15 | 1.1020 |
| 20 | 1.1394 |
| 25 | 1.1783 |
| 30 | 1.2185 |
| 35 | 1.2599 |
| 37.40 | 1.2800 |
| 40 | 1.3028 |
| 45 | 1.3476 |

According to the literature values, when the specific gravity of the electrolyte solution is 1.28 (20°C), "Concentration of sulfuric acid of electrolyte solution" = 37.40 (% by mass) = 100 × W4/(W4 + W5) is set. From the actually measured values of W2 and W3 and the above relational expression, even if the quantity of electricity y (Ah) during charge from the charge state X (%) to the full charge state is unknown, W4 can be obtained by calculation. Furthermore, the quantity of electricity y (Ah) can be obtained. The specific gravity of the electrolyte solution, the amount of the electrolyte solution obtained by disassembling the lead-acid battery, and Table 1 can be used to determine W2 and W3.

In order to determine the content of lead dioxide in the positive electrode material PM0 of the lead-acid battery in the virtual full charge state, first, the lead-acid battery is disassembled, the positive electrode is taken out, sulfuric acid is removed from the positive electrode within 2 hours by washing with water, and the positive electrode is dried by blowing air at 60 ± 5°C. Next, a dried positive electrode material PMx is separated from the positive electrode, and the positive electrode material PMx is pulverized. The content x3 (% by mass) of lead dioxide ($PbO_2$), the content x4 (% by mass) of PbO, and the content x5 (% by mass) of $PbSO_4$ in the pulverized positive electrode material PMx are measured. However, since the lead-acid battery to be disassembled is usually not in a full charge state, the content x3 of lead dioxide in the positive electrode material PMx is not the content of lead dioxide in the positive electrode material PM0 of the lead-acid battery in a full charge state.

Therefore, the content x1 (% by mass) of lead dioxide in the positive electrode material PM0 of the lead-acid battery is obtained from the following Formula (4) using the quantity of electricity y (Ah) necessary for charging from the charge state X (%) to the virtual full charge state. Due to the charge reaction of the lead-acid battery, $PbO_2$ increases by 4.462 g, $PbSO_4$ decreases by 5.658 g, and PbO decreases by 4.164 g per 1 Ah of the quantity of electricity. A difference between the decrease amount of $PbSO_4$ and the increase amount of $PbO_2$ is 1.196. A difference between the increase amount of $PbO_2$ and the decrease amount of PbO is 0.298. Hereinafter, the mass of the positive electrode material PMx is A (g).

$$x1 \ (\% \ by \ mass) = 100 \times (A \cdot x3 + 4.462y)/(A - 1.196y) \quad \ldots (4)$$

However, when the content x6 (% by mass) of $PbSO_4$ in the positive electrode material PM0 obtained by Formula (5) is a negative value, ya (Ah) of the quantity of electricity y is consumed in an oxidation reaction in which $PbSO_4$ becomes lead dioxide, and yb (Ah) of the quantity of electricity y is consumed in an oxidation reaction in which PbO becomes lead dioxide. Therefore, x1 is obtained from Formulas (6), (7), and (8).

$$x6 \ (\% \ by \ mass) = 100 \times (A \cdot x5 - 5.658y)/(A - 1.196y) \quad \ldots (5)$$

$$y = ya + yb \quad \ldots (6)$$

$$x1 \ (\% \ by \ mass) = 100 \times (A \cdot x3 + 4.462y)/(A - 1.196ya + 0.298yb) \quad \ldots (7)$$

$$A \cdot x5 = 5.658ya \quad \ldots (8)$$

However, the content x3 of lead dioxide ($PbO_2$) in the positive electrode material PMx is determined by the following procedures. First, an acetic acid-ammonium acetate solution and a 0.1 N sodium thiosulfate solution are added to the pulverized sample A (g) of the positive electrode material PMx, and the mixture is stirred to completely dissolve the sample A (g). A starch solution is added to the sample solution, a 0.1 N iodine solution is added dropwise to the sample solution, and sodium thiosulfate ions remaining in the solution are titrated with a time point at which a purple color due to an iodine-starch reaction is exhibited as an end point. The empty experiment is also similarly performed, and the content x3 (% by mass) of $PbO_2$ is calculated from the amount of the iodine solution used for the titration using the following Formula (5).

$$x3 \ (\% \ by \ mass) = 100 \times [0.01196 \times (b' - b) \times f]/A \quad \ldots (5)$$

b': Used amount (ml) of iodine solution consumed at titration in empty experiment
b: Used amount (ml) of iodine solution consumed for titration of sample solution
f: Factor of iodine solution
A: Mass (g) of sample

The content x4 (% by mass) of lead monoxide (PbO) in the positive electrode material PMx is determined by the following procedures. First, a sample of the pulverized positive electrode material PMx is precisely weighed, 6M acetic acid is added, followed by heating, dissolving, and filtering. Aqueous ammonia and a buffer solution of ammonium acetate are added to the filtrate to adjust the pH of the sample solution to 5.0 to 5.5. Thereafter, the content of lead monoxide (PbO) is determined by titrating with a 0.01M EDTA (disodium ethylenediaminetetraacetate) solution using xylenol orange as an indicator.

The content x5 (% by mass) of lead sulfate ($PbSO_4$) in the positive electrode material PMx is determined by the following procedures. First, the content of sulfur contained in a sample of the pulverized positive electrode material PMx is measured, and the content of sulfur is converted into the content of lead sulfate. For example, when the sample is combusted at a high temperature, sulfur contained in the sample is gasified to produce sulfur dioxide. The content of sulfur contained in the sample is determined by measuring the gas concentration of sulfur dioxide using an infrared detector. Alternatively, the content of a sulfur element in the sample is measured using a sulfur element analyzer (S-200 type manufactured by LECO Corporation).

When the charge state of the lead-acid battery is determined, the target lead-acid battery is a formed lead-acid battery. The lead-acid battery may be a lead-acid battery immediately after formation or after a lapse of time from the formation as long as the lead-acid battery is formed. For example, the lead-acid battery may be a lead-acid battery in use after formation (preferably in the initial stage of use). The lead-acid battery at the initial stage of use refers to a lead-acid battery that has not been used for a long time (for example, within two months from the start of use) and has hardly deteriorated.

Hereinafter, the lead-acid battery according to an embodiment of the present invention will be described for each of main constituent elements, but the present invention is not limited to the following embodiment.

[Negative electrode]

The negative electrode includes a negative electrode material and a negative current collector. The negative electrode can be obtained in such a manner that a negative current collector is coated or filled with a negative electrode paste, which is then cured and dried to prepare an unformed negative electrode, and thereafter, the unformed negative electrode is formed. The negative electrode paste is prepared, for example, by kneading a lead powder, an additive used as necessary, and water and sulfuric acid (or sulfuric acid aqueous solution). The unformed negative electrode may be cured at a temperature higher than room temperature and high humidity.

The formation can be performed by charging the element in a state where the element including the unformed negative electrode is immersed in the electrolyte solution containing sulfuric acid in the container of the lead-acid battery. However, the formation may be performed before the lead-acid battery or the element is assembled. The formation produces spongy lead.

The negative electrode material contains a negative active material (specifically, lead or lead sulfate) that exhibits a capacity through a redox reaction, and an additive used as necessary.

Examples of the additive include an organic expander, an organic polymer compound, a fatty acid, a carbonaceous material, barium sulfate, and a reinforcing material. That is, the negative electrode material may contain an organic expander, an organic polymer compound, a fatty acid, a carbonaceous material, barium sulfate, and a reinforcing material and the like.

It is known that the organic expander has an action of improving the life performance of the lead-acid battery and improving the discharge performance at low temperature. Examples of the organic expander include lignin, lignin derivatives, and synthetic organic expanders (such as formaldehyde condensate of phenol compound).

Examples of the lignin derivative include lignin sulfonic acid and salts thereof (alkali metal salts and the like). The negative electrode material may contain one kind or two or more kinds of organic expanders.

The synthetic organic expander preferably contains a condensate of a bisarene compound. When the negative electrode material contains the condensate of the bisarene compound, the specific surface area of the negative electrode material increases, and therefore, the amount of overcharge tends to increase. Meanwhile, since the lead-acid battery according to the present disclosure can make the positive electrode material less noble during charging, the amount of overcharge can be kept low even when the lead-acid battery contains the condensate of the bisarene compound. By combining the condensate of the bisarene compound with the positive electrode material in which the content of lead dioxide in the virtual full charge state is controlled to 70% by mass or more and 82% by mass or less, the charge acceptability is improved, so that the durability in a charge-discharge cycle in PSOC is further improved.

The content of the organic expander in the negative electrode material is, for example, 0.01% by mass or more, and may be 0.03% by mass or more. The content of the organic expander is, for example, 1.0% by mass or less and may be 0.6% by mass or less.

The fatty acid has an action of suppressing electrolyte solution decrease. As the fatty acid, a higher fatty acid is desirable, and in particular, a higher fatty acid having 9 or more carbon atoms or having a large molecular weight of 16 or more is desirable. Examples of the fatty acid include palmitic acid, stearic acid, oleic acid, linoleic acid, and linolenic acid. These may be used alone or in combination of two or more.

The organic polymer compound has an action of suppressing electrolyte solution decrease. The organic polymer compound may contain a repeating structure of oxy C2-4 alkylene units, or may be a fatty acid ester having such a structure. By combining the organic polymer compound with the positive electrode material in which the content of lead dioxide in the virtual full charge state is controlled to 70% by mass or more and 82% by mass or less, the electrolysis of water is further suppressed.

The organic polymer compound may have a peak in a range of 3.2 ppm or more and 3.8 ppm or less in a chemical shift of $^1$H-NMR spectrum measured using deuterated chloroform as a solvent.

The inclusion of the organic polymer compound in the negative electrode material is expected to reduce the amount of electrolyte solution decrease. Among them, the organic polymer compound containing a repeating structure of oxy C2-4 alkylene units is considered to have a high adsorption action on lead. It is considered that when the wide region of the

surface of lead is covered with the organic polymer compound, a hydrogen overvoltage increases, hydrogen generation due to the electrolysis of water hardly occurs, and thus the electrolyte solution decrease can be reduced.

The oxy C2-4 alkylene unit is a unit represented by -O-R1- (R1 represents a C2-4 alkylene group). The organic polymer compound containing a repeating structure of oxy C2-4 alkylene units preferably contains a repeating structure of oxypropylene units (-O-CH (-CH$_3$)-CH$_2$-). The organic polymer compound containing a repeating structure of oxypropylene units may not contain a repeating structure of oxyethylene units (-O-CH$_2$-CH$_2$-). The organic polymer compound containing a repeating structure of oxy C2-4 alkylene units also includes those classified as surfactants (for example, nonionic surfactants).

Since an organic polymer compound containing a repeating structure of oxypropylene units easily forms a linear structure, it is considered that the electrolysis of water is reduced by thinly and widely coating the surface of lead. The repeating structure of oxypropylene units has higher hydrophobicity than that of the repeating structure of oxyethylene units. Thus, it is considered that the organic polymer compound containing the repeating structure of the oxypropylene units has lower adsorbability to lead sulfate than that of the repeating structure of oxyethylene units, and higher charge acceptability can be secured.

When the organic polymer compound contains a sulfur element, the organic polymer compound tends to be excessively adsorbed on the surface of lead sulfate. Thus, the organic polymer compound preferably contains no sulfur element. This makes it easy to ensure high charge acceptability and resistance in a charge-discharge cycle in PSOC.

The organic polymer compound preferably has a number average molecular weight (Mn) of, for example, 500 or more and 10,000 or less, or 1000 or more and 10,000 or less. In this case, the organic polymer compound is likely to remain in the negative electrode material, and the electrolysis of water can be further reduced. Since the effect of suppressing the uneven distribution of the organic polymer compound on the lead surface is enhanced, the charge acceptability and the resistance in a charge-discharge cycle in PSOC can be further improved.

The Mn of the organic polymer compound may be 500 or more (or 1000 or more) and 10,000 or less, 500 or more (or 1000 or more) and 5000 or less, 500 or more (or 1000 or more) and 4000 or less, 500 or more (or 1000 or more) and 3000 or less, or 500 or more (or 1000 or more) and 2500 or less.

The negative electrode material may contain one kind or two or more kinds of organic polymer compounds. As the negative electrode material, two or more kinds of organic polymer compounds having different Mn may be used. That is, the organic polymer compound may have a plurality of peaks of Mn in the molecular weight distribution.

The number average molecular weight (Mn) of the organic polymer compound is determined by gel permeation chromatography (GPC). A standard substance used for determining Mn is polyethylene glycol.

From the viewpoint of further improving the resistance in a charge-discharge cycle in PSOC, the content of the organic polymer compound in the negative electrode material is preferably 10,000 ppm or less on a mass basis. From the viewpoint of further suppressing the electrolyte solution decrease, the content of the organic polymer compound in the negative electrode material is preferably 30 ppm or more on a mass basis.

The total content (mass basis) of the polymer compound and the fatty acid in the negative electrode material may be 30 ppm or more and 10,000 ppm or less, 30 ppm or more and 8000 ppm or less, 30 ppm or more and 4000 ppm or less, 50 ppm or more and 10,000 ppm or less, 50 ppm or more and 8000 ppm or less, 50 ppm or more and 4000 ppm or less, 80 ppm or more and 10,000 ppm or less, 80 ppm or more and 8000 ppm or less, or 80 ppm or more and 4000 ppm or less.

The carbonaceous material in the negative electrode material has high conductivity to enhance the charge acceptability of the negative electrode, so that the accumulation of lead sulfate is easily suppressed. Since such a phenomenon reduces the amount of overcharge, the phenomenon also contributes to the suppression of the corrosion of the positive current collector and the electrolyte solution decrease. By combining the carbonaceous material with the positive electrode material in which the content of lead dioxide in the virtual full charge state is controlled to 70% by mass or more and 82% by mass or less, the charge acceptability is further improved.

Examples of the carbonaceous material contained in the negative electrode material include carbon black, graphite, hard carbon, and soft carbon. Examples of the carbon black include acetylene black, furnace black, and lamp black. Furnace black also includes ketjen black (product name). The graphite may be a carbonaceous material including a graphite-type crystal structure and may be either artificial graphite or natural graphite. The negative electrode material may contain one kind or two or more kinds of carbonaceous materials.

The content of the carbonaceous material in the negative electrode material is 0.45% by mass or more, may be 1.0% by mass or more, or may be 1.2% by mass or more. The content of the carbonaceous material is, for example, 5% by mass or less and may be 3% by mass or less.

The content of barium sulfate in the negative electrode material may be 0.05% by mass or more and 3% by mass or less, or may be 0.1% by mass or more and 2% by mass or less.

The negative current collector may be formed by casting lead (Pb) or a lead alloy, or may be formed by processing a lead sheet or a lead alloy sheet. Examples of the processing method include expanding processing and punching processing. When a grid-like current collector is used as the negative current collector, it is easy to support the negative electrode material.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative current collector may include a surface layer. The surface layer of the negative current collector and the inside thereof may have different compositions. The surface layer may be formed in a part of the negative current collector. The surface layer may be formed in the lug part of the negative current collector. The surface layer of the lug part may contain Sn or a Sn alloy.

<<Analysis>>

Hereinafter, a method for analyzing the additive contained in the negative electrode material will be described. Prior to measurement or analysis, the lead-acid battery actually in the full charge state is disassembled to obtain a negative electrode to be analyzed.

Here, the full charge state of the flooded-type lead-acid battery is defined by the definition of JIS D 5301:2019. More specifically, the following state is defined as the full charge state: the lead-acid battery is charged in a water bath at $25°C \pm 2°C$ at a current (A) 0.2 times as large as a numerical value (numerical value whose unit is Ah) described as a rated capacity until a terminal voltage (V) during charge measured every 15 minutes or an electrolyte solution density subjected to temperature correction to 20°C exhibits a constant value at three significant digits continuously three times. In the case of a valve regulated lead-acid battery, the full charge state is a state where the lead-acid battery is subjected to constant current constant voltage charge of 2.23 V/cell at the current (A) 0.2 times as large as the numerical value (numerical value whose unit is Ah) described as the rated capacity in an air tank of $25°C \pm 2°C$, and the charge is completed when the charge current during constant voltage charge becomes a value (A) of 0.005 times as large as the numerical value (numerical value whose unit is Ah) described in the rated capacity.

The obtained negative electrode is washed with water to remove sulfuric acid from the negative electrode. The washing with water is performed until it is confirmed that color of a pH test paper does not change by pressing the pH test paper against the surface of the negative electrode plate washed with water. However, the washing with water is performed within two hours. The negative electrode washed with water is dried at $60 \pm 5°C$ in a reduced pressure environment for about six hours. After drying, when the sticking member is included in the negative electrode plate, the sticking member is removed by peeling. Next, the negative electrode material is separated from the negative electrode to obtain a sample (hereinafter referred to as sample A). The sample A is ground as necessary and subjected to analysis.

(1) Analysis of organic polymer compound

(1-1) Qualitative analysis of organic polymer compound

The ground sample A is used. $150.0 \pm 0.1$ mL of chloroform is added to $100.0 \pm 0.1$ g of the sample A, and the mixture is stirred at $20 \pm 5°C$ for 16 hours to extract the organic polymer compound. Thereafter, the solid content is removed by filtration. At least one selected from an infrared spectroscopic spectrum, an ultraviolet-visible absorption spectrum, an NMR spectrum, LC-MS, and pyrolysis GC-MS is measured using a chloroform solution in which the organic polymer compound is dissolved or a solid obtained by drying the chloroform solution, and the organic polymer compound is specified from the information.

When the oxy C2-4 alkylene unit is analyzed, chloroform is distilled off under reduced pressure from the chloroform solution in which the organic polymer compound is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. From the peak in this range, the type of the oxy C2-4 alkylene unit is specified.

Apparatus: type AL400 nuclear magnetic resonance spectrometer, manufactured by JEOL Ltd.

   Observation frequency: 395.88 MHz
   Pulse width: 6.30 μs
   Pulse repeating time: 74.1411 seconds
   Number of integrations: 32
   Measurement temperature: room temperature (20 to 35°C)
   Reference: 7.24 ppm
   Sample tube diameter: 5 mm

(1-2) Quantitative analysis of organic polymer compound

An appropriate amount of the chloroform soluble component is dissolved in deuterated chloroform together with tetrachloroethane (TCE) of mr (g) measured with an accuracy of $\pm$ 0.0001 g, and a $^1$H-NMR spectrum is measured. An integrated value (Sa) of the peak in which the chemical shift is present in the range of 3.2 to 3.8 ppm and an integrated value (Sr) of a peak derived from TCE are determined, and a mass-based content Cn (ppm) of the organic polymer compound in the negative electrode material is determined from the following formula.

$$Cn = Sa/Sr \times Nr/Na \times Ma/Mr \times mr/m \times 1000000$$

(wherein Ma is a molecular weight of a structure showing a peak in a chemical shift range of 3.2 to 3.8 ppm (more specifically, a molecular weight of oxy C2-4 alkylene units), and Na is the number of hydrogen atoms bonded to a carbon atom of a main chain of the repeating structure. Nr and Mr are the number of hydrogen contained in a molecule of reference substance and the molecular weight of the reference substance, respectively, and m (g) is the mass of the negative electrode material used for extraction.)

Since the reference substance in this analysis is TCE, Nr = 2 and Mr = 168 are set. In addition, m = 100 is set.

For example, when the organic polymer compound is polypropylene glycol, Ma is 58, and Na is 3. When the polymer compound is polyethylene glycol, Ma is 44, and Na is 4. In the case of a copolymer, Na and Ma are values obtained by averaging Na values and Ma values of each monomer unit using a molar ratio (mol%) of each monomer unit contained in the repeating structure.

In the quantitative analysis, the integrated value of the peak in the $^1$H-NMR spectrum is determined using data processing software "ALICE" manufactured by JEOL Ltd.

(1-3) Mn Measurement of organic polymer compound

Using the chloroform soluble component, GPC measurement of the polymer compound is performed under the following conditions using the following apparatuses. Separately, a calibration curve (standard curve) is prepared from a plot of Mn of the standard substance and elution time. The Mn of the polymer compound is calculated based on the standard curve and the GPC measurement result of the polymer compound. However, the esterified product, the etherified product, and the like may be decomposed in the chloroform soluble component.

Analysis system: 20A system (manufactured by Shimadzu Corporation)
Column: two columns of GPC KF-805L (manufactured by Shodex) connected in series
Column temperature: 30°C $\pm$ 1°C
Mobile phase: tetrahydrofuran
Flow rate: 1 mL/min.
Concentration: 0.20% by mass
Injection amount: 10 $\mu$L
Standard substance: polyethylene glycol (Mn = 2,000,000, 200,000, 20,000, 2,000, 200)
Detector: differential refractive index detector (Shodex RI-201H, manufactured by Shodex)

(2) Analysis of organic expander

(2-1) Qualitative analysis of organic expander in negative electrode material

The pulverized sample A is immersed in a 1 mol/L sodium hydroxide aqueous solution to extract the organic expander. If the extract contains a plurality of organic expanders, the organic expander is separated from the extract as necessary. For each separated material containing each organic expander, insoluble components are removed by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.

A type of the organic expander is determined from a combination of information obtained from, for example, an infrared spectroscopic spectrum measured using the sample B of the organic expander, an ultraviolet-visible absorption spectrum measured by an ultraviolet-visible absorption spectrometer after the sample B is diluted with distilled water or the like, an NMR spectrum of a solution obtained by dissolving the sample B in a predetermined solvent such as heavy water, or pyrolysis GC-MS enabling acquirement of information of individual compounds forming a substance.

When the extract contains a plurality of organic expanders, the organic expanders are separated as follows. First, the extract is measured by infrared spectroscopy, NMR, and/or GC/MS to determine whether or not a plurality of types of organic expanders are contained. Next, a molecular weight distribution is measured by GPC analysis of the extract, and if the plurality of types of organic expanders can be separated by molecular weight, the organic expander is separated by column chromatography based on a difference in molecular weight. When it is difficult to separate the organic expander due to the difference in molecular weight, the organic expander is separated by a precipitation separation method using a difference in solubility that varies depending on the type of the functional group and/or the amount of the functional group of the organic expander. For example, when two kinds of organic expanders are separated, an aqueous sulfuric acid solution is added dropwise to a mixture obtained by dissolving the extract in an NaOH aqueous solution to adjust the pH of the mixture, thereby aggregating and separating one of the organic expanders. The insoluble component is removed by filtration as described above from the separated material dissolved again in the NaOH aqueous solution. The remaining solution after separating one of the organic expanders is concentrated. The obtained concentrate contains the other organic expander, and the insoluble component is removed from the concentrate by filtration as described above.

(2-2) Quantitative determination of content of organic expander in negative electrode material

Similar to (2-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a standard curve prepared in advance.

When a lead-acid battery in which the content of the organic expander is unknown is obtained and the content of the organic expander is measured, a structural formula of the organic expander cannot be strictly specified, so that the same organic expander may not be used for the standard curve. In this case, the content of the organic expander is measured using the ultraviolet-visible absorption spectrum by creating a calibration curve using the organic expander extracted from the negative electrode of the battery and a separately available organic polymer in which the ultraviolet-visible absorption spectrum, the infrared spectroscopic spectrum, the NMR spectrum, and the like exhibit similar shapes.

(3) Quantitative determination of carbonaceous material and barium sulfate

To 10 g of the pulverized sample A, 50 mL of nitric acid having a concentration of 20% by mass is added, followed by heating for about 20 minutes to dissolve the lead component as lead ions. Next, the resulting solution is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at $110°C \pm 5°C$. The filtered sample is a mixed sample of the carbonaceous material and barium sulfate. The mass of the membrane filter is subtracted from the total mass of the mixed sample (hereinafter, referred to as sample C) and the membrane filter after drying to measure the mass of sample C (Mm). Thereafter, the sample C is placed in a crucible together with a membrane filter and is burned and incinerated at $1,300°C$ or higher. The residue remaining is barium oxide. The mass of barium sulfate (MB) is determined by converting the mass of barium oxide to the mass of barium sulfate. The mass of the carbonaceous material is calculated by subtracting the mass MB from the mass Mm.

[Positive electrode]

The positive electrode can be classified into a paste-type, a clad-type, and the like. Although any positive electrode may be used, the lead-acid battery used in PSOC in a vehicle subjected to idling stop control is generally a paste-type positive electrode.

The paste-type positive electrode includes a positive electrode material and a positive current collector. The positive electrode can be obtained in such a manner that a positive current collector is coated or filled with a positive electrode paste, which is then cured and dried to prepare an unformed positive electrode, and thereafter, the unformed positive electrode is formed. The positive electrode paste is prepared, for example, by kneading a lead powder, an additive (for example, antimony trioxide) used as necessary, and water and sulfuric acid (or sulfuric acid aqueous solution). The unformed positive electrode plate may be cured at a temperature higher than room temperature and high humidity.

The formation can be performed by charging the element in a state where the element including the unformed positive electrode is immersed in the electrolyte solution containing sulfuric acid in the container of the lead-acid battery. However, the formation may be performed before the lead-acid battery or the element is assembled.

The positive electrode material contains a positive active material (lead dioxide or lead sulfate) that exhibits a capacity through a redox reaction, and may contain an additive as necessary.

Examples of the additive include antimony (Sb). That is, the positive electrode material may contain antimony. Since antimony suppresses the softening of the positive electrode material, the cycle life can be remarkably improved.

When antimony is combined with the positive electrode material in which the content of lead dioxide in the virtual full charge state is controlled to 70% by mass or more and 82% by mass or less, gas generation in the positive electrode is suppressed, so that the softening of the positive electrode material is further suppressed.

The content of antimony in the positive electrode material is, for example, 0.03% by mass or more, and may be less than 0.5% by mass, 0.4% by mass or less, or 0.1% by mass or less. When the content of antimony in the positive electrode material is 0.5% by mass or more, the effect of antimony may be saturated, and antimony may be eluted from the positive electrode material. Antimony eluted in the electrolyte solution tends to move to the negative electrode and precipitate. Meanwhile, the inclusion of the organic polymer compound in the negative electrode material makes it possible to suppress the precipitation of antimony on the negative electrode.

A quantitative analysis method of antimony is shown below.

First, the positive electrode is taken out from the lead-acid battery, sulfuric acid is removed within 2 hours by washing with water, and the positive electrode is dried by blowing air at $60 \pm 5°C$. Next, an appropriate amount of a sample of the positive electrode material in the dried state is collected from the positive electrode, and the mass of the sample is measured. Next, the entire amount of the sample is dissolved in a mixed aqueous solution containing tartaric acid, nitric acid, and hydrogen peroxide. The solution obtained by the dissolution of the entire amount is diluted with ion-exchanged water as necessary to define a volume, and thereafter, emission intensity of Sb in the solution is measured by ICP emission spectroscopy. The mass of Sb contained in the solution is obtained using a previously-produced calibration curve. The ratio of the mass of Sb to the mass of the sample of the positive electrode active material subjected to analysis is determined as the content of Sb.

The positive current collector of the paste type positive electrode may be formed by casting lead (Pb) or a lead alloy, or may be formed by processing a lead sheet or a lead alloy sheet. Examples of the processing method include expanding processing and punching processing. By using a grid-like current collector as the positive current collector, the positive electrode material is easily supported. The positive current collector may include a surface layer. The surface layer of the positive current collector and the inside thereof may have different compositions. The surface layer may be formed in a part of the positive current collector. The surface layer may be formed only on the grid portion, only on the lug portion, or only on the frame rib portion of the positive current collector.

The lead alloy used for the positive current collector is preferably a Pb-Sb-based alloy, a Pb-Ca-based alloy, or a Pb-Ca-Sn-based alloy.

The positive current collector may contain tin (Sn). Since the positive current collector contains Sn, the corrosion of the positive current collector is reduced by the action of Sn precipitated at the crystal grain boundary of lead. When Sn and the positive electrode material in which the content of lead dioxide in the virtual full charge state is controlled to 70% by mass or more and 82% by mass or less are combined, the corrosion of the positive current collector is further suppressed.

The content of tin in the positive current collector may be 0.95% by mass or more or 1.1% by mass or more. The content of Sn in the positive current collector is preferably less than 3% by mass, and may be 2% by mass or less. When the content of Sn is less than 3% by mass, the influence of the corrosion of the positive current collector is likely to become apparent, but when the negative electrode material contains the organic polymer compound, overcharge is suppressed, so that high resistance in a charge-discharge cycle at a high temperature can be secured.

A quantitative analysis method of Sn in the positive current collector is shown below.

Prior to quantitative analysis of Sn, a positive current collector is obtained by removing the positive electrode material from the positive electrode taken out from the lead-acid battery, and a part of the positive current collector is collected to provide a sample for analysis. More specifically, vibration is applied to the positive electrode, so that the positive electrode material falls off from the positive current collector. The positive electrode material remaining around the positive current collector is then removed using a ceramic knife, and a part of a portion of the positive current collector which has metallic luster is collected as a sample. The mass of the collected sample is measured, and the sample is then mixed with tartaric acid and dilute nitric acid to obtain an aqueous solution. Hydrochloric acid is added to the aqueous solution to precipitate lead chloride, and the filtrate was collected by filtration. Using the filtrate, the content of Sn in the positive current collector is determined by the following procedure.

Quantification of Sn contained in the positive current collector is analyzed in accordance with lead separation inductively coupled plasma atomic emission spectroscopy described in JIS H 2105: 1955. More specifically, the concentration of Sn in the filtrate is analyzed by a calibration curve method using an ICP emission spectrophotometer, and the content of Sn in the positive current collector is determined from the concentration of Sn and the mass of the collected sample. As the ICP emission spectrophotometer, ICPS-8000 manufactured by Shimadzu Corporation is used.

[Electrolyte solution]

The electrolyte solution is an aqueous solution containing sulfuric acid and may be gelled as necessary. The polymer compound may be contained in the electrolyte solution.

The electrolyte solution may contain cations (for example, metal cations) and/or anions (for example, anions other than sulfate anions (such as phosphate ions)) as necessary. Examples of the metal cation include at least one selected from the group consisting of a Na ion, a Li ion, a Mg ion, and an Al ion.

[Separator]

As the separator disposed between the negative electrode and the positive electrode, for example, at least one selected from a nonwoven fabric and a microporous membrane is used.

The nonwoven fabric is a mat in which fibers are intertwined without being woven and is mainly made of fibers. For example, 60% by mass or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among these, glass fibers are preferable. The nonwoven fabric may contain components in addition to the fibers, such as acid-resistant inorganic powder, a polymer as a binder, and the like.

The microporous membrane is a porous sheet mainly made of components except for fiber components and is obtained by, for example, extrusion molding a composition containing, for example, a pore-forming additive into a sheet shape and then removing the pore-forming additive to form pores. The microporous membrane is preferably made of a material having acid resistance and is preferably composed mainly of a polymer component. As the polymer component, a polyolefin (polyethylene, polypropylene, or the like) is preferable. Examples of the pore-forming additive include a polymer powder and oil.

The separator may be, for example, made of only a nonwoven fabric or made of only a microporous membrane. The separator may be a stacked article of a nonwoven fabric and a microporous membrane, a stacked article of different or the same kind of materials, or a stacked article of different or the same kind of materials in which recesses and projections are engaged to each other.

The separator may have a sheet shape or may be formed in a bag shape. One sheet-like separator may be disposed between the positive electrode and the negative electrode. The plate may be sandwiched by the folded sheet-like separator. The positive electrode sandwiched by the folded sheet-like separator and the negative electrode sandwiched by the folded sheet-like separator may be overlapped, or one of the positive electrode and the negative electrode may be sandwiched by the folded sheet-like separator and overlapped with the other plate. When the bag-shaped separator is used, the bag-shaped separator may store the positive electrode or may store the negative electrode.

In the present specification, the up-down direction of the lead-acid battery or constituent elements (such as element, container) of the lead-acid battery means the up-down direction of the lead-acid battery in the vertical direction when the lead-acid battery is in use. Each of the positive electrode and the negative electrode includes a lug part for connecting to an external terminal. In a horizontal valve regulated lead-acid battery or the like, the lug part may be provided at a side part of the plate so as to protrude laterally; however, in many lead-acid batteries, the lug part is usually provided at an upper part of the plate so as to protrude upward.

The element usually includes a plurality of positive electrodes, a plurality of negative electrodes, and a separator interposed between the positive electrode and the negative electrode. The positive electrode and the negative electrode are alternately stacked with the separator interposed therebetween. The width direction (hereinafter, referred to as an "x direction") of the element is a direction orthogonal to the stacking direction (hereinafter, referred to as a "y direction") of the positive electrode, the negative electrode, and the separator, and orthogonal to the up-down direction (vertical direction). The up-down direction (vertical direction) is defined as a z direction.

An example of a method for producing a lead-acid battery includes assembling an unformed cell including an element and an electrolyte solution, and forming the unformed cell. The positive electrode contains a positive current collector and a paste-type positive electrode material, the positive electrode material contains lead dioxide, and the electrolyte solution contains water and sulfuric acid. The positive electrode, the negative electrode, the electrolyte solution, and the separator are each prepared prior to assembly of the element. Assembling an unformed cell may include storing an unformed element and an electrolyte solution in a cell chamber of a container. Each cell of the lead-acid battery includes an element and an electrolyte solution stored in each cell chamber.

In forming an unformed cell, the positive electrode may be formed so that the content of lead dioxide in the positive electrode material after the forming is 70% by mass more and 82% by mass or less (preferably less than 80% by mass or 75% by mass or less). In that case, adjusting the specific gravity of the electrolyte solution to a reference value may be further included when the specific gravity of the electrolyte solution after the forming is not in a state of the reference value. In adjusting the specific gravity of the electrolyte solution to the reference value, the concentration of sulfuric acid in the electrolyte solution is diluted or increased.

In order to suppress the stratification, it is effective to increase the amount of sulfuric acid contained in the element. In order to cause the element to hold as much electrolyte solution as possible, it is desirable to narrow a space outside the element.

The content of lead dioxide in the positive electrode material tends to be as follows depending on conditions during formation. [1] The larger the amount of charge during the formation, the larger the content of lead dioxide. [2] The higher the temperature during the formation, the higher the larger the content of lead dioxide. [3] The lower the current value during the formation, the larger the content of lead dioxide. [4] The lower the specific gravity of the electrolyte solution during the formation, the larger the content of lead dioxide.

By adjusting the amount of charge during the formation, the temperature during the formation, the current value during the formation, the specific gravity of the electrolyte solution during the formation, and the like, a battery having a predetermined content of lead dioxide can be produced.

When the content of lead dioxide is set to a predetermined value by adjusting the amount of charge during the formation, the content can be set as follows. First, the formation is performed under some conditions in which only the amount of charge during the formation is changed, and a relational expression between the amount of charge and the content of lead dioxide during the formation is created from the content of lead dioxide obtained by analyzing these batteries. From this relational expression, it is possible to obtain the amount of charge during the formation that achieves a predetermined content of lead dioxide. By performing the formation using the amount of charge during the formation obtained from this relational expression, a battery having a predetermined content of lead dioxide can be produced.

When the content of lead dioxide is set to a predetermined value by adjusting the temperature during the formation, a relational expression between the temperature during the formation and the content of lead dioxide is similarly created, and the temperature during the formation is selected based on the relational expression, whereby a battery having a predetermined content of lead dioxide can be produced.

Furthermore, when the content of lead dioxide is set to a predetermined value by adjusting the current value during the formation, a relational expression between the current value during the formation and the content of lead dioxide is similarly created, and the current value during the formation is selected based on the relational expression, whereby a battery having a predetermined content of lead dioxide can be produced.

When the content of lead dioxide is set to a predetermined value by adjusting the specific gravity of the electrolyte solution during the formation, a relational expression between the specific gravity of the electrolyte solution during the formation and the content of lead dioxide is similarly created, and the specific gravity of the electrolyte solution during the formation is selected based on the relational expression, whereby a battery having a predetermined content of lead dioxide can be produced.

The container includes a bottom part, a side wall rising from a peripheral edge of the bottom part, and a lid part closing an opening end part of the side wall. The inside of the container may be divided into a plurality of spaces by partitions. For example, the inside of the container may be divided into a plurality of (for example, six) spaces by partitions parallel to each other. The plurality of partitions may cross each other and be divided into a plurality of (for example, four or more) spaces. For example, a dimension X of the plurality of spaces (cell chambers) in the x direction (the width direction of the element) is larger than a dimension (group length) Y of the element in the y direction (stacking direction). Hereinafter, each parameter may be obtained in each of the plurality of cell chambers to calculate an average value.

A dimension X in the x direction and a dimension Z in the z direction of the element are regulated by a dimension (x) in the x direction and a dimension (z) in the z direction of the plate. The dimension X of the element may be regarded as the dimension (x) of the plate. The dimension (x1) of the positive electrode in the x direction and the dimension (x2) of the negative electrode in the x direction are usually substantially the same. When (x1) and (x2) are different from each other, an average value of (x1) and (x2) may be defined as (x). The dimension Y of the element in the y direction corresponds to an interval between portions disposed on outermost sides in the stacking direction of two members (positive electrode, negative electrode, or separator) disposed on outermost sides in the stacking direction. The cross-sectional area Sg of the element is represented by $X \times Y$.

However, when there is a rib on the surface of the container facing the element, the separator is disposed on the outermost side in the stacking direction, there is a rib on the surface of the separator facing the container, and the group length Y is larger than the distance between the tips of the ribs facing each other in the container, the distance between the tips of the ribs is defined as the group length Y.

Here, in a cross section CS parallel to the bottom part of the container of the lead-acid battery, a ratio Ra of a cross-sectional area (Se) of the electrolyte solution present outside the outer edge of the element to the cross-sectional area (Sg) of the element is regulated to 0.20 or less. That is, the side wall or the partition of the container is close to the periphery of the element, and a volume in which the electrolyte solution can be retained is limited. The ratio Ra may be 0.15 or less or 0.12 or less.

The cross-sectional area (Sg) of the element may be rephrased as an area of the orthographic projection image of the element with respect to the bottom part of the container. When there is a space between the positive electrode or the negative electrode and the separator, the area of the orthographic projection image of the space is also included in the area of the orthographic projection image of the element.

The cross section CS parallel to the bottom part of the container of the lead-acid battery is the cross section of the lead-acid battery at a height of 2 cm from the back surface (outer surface) of the bottom part of the container. The same applies to a case where the dimension of the cell chamber changes in the height direction of the container. It is important to control the electrolyte solution present at a height of 2 cm from the back surface (outer surface) of the bottom part of the container, that is, below the upper part of the container, in order to improve the cycle durability of the lead-acid battery used in PSOC.

In the cross section CS, the area (S) of the region surrounded by the inner edge of the container, the cross-sectional area (Sg) of the element, and the cross-sectional area (Se) of the electrolyte solution present outside the outer edge of the element are determined by the following method. The area (S) is a cross-sectional area of a space (cell chamber) storing one element. However, the area (S) is a cross-sectional area of a space (cell chamber) storing the element.

<Area (S)>

Water is poured into a space (cell chamber) for storing the element up to a height of 2 cm from the back surface of the bottom part of the container. Next, water is added up to a height of 3 cm. The area (S) is obtained from the added water amount. If the added amount of water is 10 cm$^3$, the cross-sectional area of the container is 10 cm$^2$.

<Cross-sectional area (Sg)>

The thickness of each of the positive electrode plate, the negative electrode plate and the separator corresponding to a height of 2 cm from the back surface of the bottom part of the container is measured with a caliper. The thickness of the separator is the total thickness. When the separator includes a rib, the total thickness is a thickness including the rib and a portion (base part) other than the rib. The total thickness is the thickness of the base part when the separator does not include the rib. The dimension (group length Y) of the element in the y direction (stacking direction) is obtained from the following formula.

$$Y = \text{thickness of positive electrode plate} \times \text{number of positive}$$

$$\text{electrode plates}$$

$$+ \text{ thickness of negative electrode plate} \times \text{number of negative}$$

$$\text{electrode plates}$$

$$+ \text{ number of plates} \times \text{thickness of separator (total thickness)}$$

$$+ \text{ number of separators in contact with container or rib of container}$$

$$\times \text{ thickness of base part of separator}$$

However, when the group length Y is larger than the distance between the tips of the ribs facing each other in the container, the distance between the tips of the ribs is defined as the group length Y. Next, the dimension (x) of the plate in the x direction (the width of the plate) is measured on a scale. The cross-sectional area Sg is a calculated value of "Sg = group length Y × width of plate (x) = Y × X".

The area S1 surrounded by the inner edge of the container in the cross section of the lead-acid battery at a height of 2 cm from the back surface of the bottom part of the container, the area S2 surrounded by the inner edge of the container in the cross section of the lead-acid battery at a depth of 2 cm from the liquid surface of the container, and the area S3 surrounded by the inner edge of the container in the cross section of the lead-acid battery at an intermediate depth of the liquid surface of the container may be substantially the same. In that case, the flow of the electrolyte solution can be controlled in the entire upper part and lower part of the container, and the effect of improving the cycle durability of the lead-acid battery used in PSOC is enhanced. Note that S1, S2, and S3 being substantially the same means that $0.95 \leq S1/S2 \leq 1.05$, $0.95 \leq S2/S3 \leq 1.05$, and $0.95 \leq S3/S1 \leq 1.05$ are satisfied. Here, the liquid level of the container refers to a liquid level having an ideal height, and refers to a height of an upper limit level imprinted on the container.

The cross-sectional area Se of the electrolyte solution present outside the outer edge of the element is a difference (Se = S - Y × (x)) between the area (S) of the region surrounded by the inner edge of the container (the cross-sectional area of the space (cell chamber) storing the element) and the cross-sectional area (Sg = Y × (x)) of the element. That is, the ratio Ra is represented by (S - Y × (x))/(Y × (x)) = Se/Sg. Since the side wall and the partition are constituent members of the container, the inner edge of the container refers to the inner edge of the side wall or the partition. When the region (cell chamber) surrounded by the inner edge of the container at a height of 2 cm from the back surface of the bottom part of the container is rectangular, the area S is represented by a product $(Xs \times Ys)$ of a dimension Xs in the x direction and a dimension Ys in the y direction.

At a height of 2 cm from the back surface of the bottom part of the container, the ratio Rb of the cross-sectional area of the positive electrode to the area (S) of the region surrounded by the inner edge of the container is 0.30 or more. The cross-sectional area (Sp) of the positive electrode is represented by $Sp = x1 \times d \times n$ using the dimension (x1) of the positive electrode in the x direction, the thickness (d) of the positive electrode, and the number (n) of positive electrodes included in one element. That is, the ratio Rb is represented by Sp/S. The volume of the positive electrode in the element is designed to be as large as possible.

In order to increase the ratio Rb, the number of the plurality of positive electrodes constituting the element may be the same as the number of the plurality of negative electrodes or larger by one in number than the number of the negative electrodes. For example, the positive electrode may be disposed at one end part in the stacking direction of the element, and the negative electrode may be disposed at the other end part. Alternatively, the positive electrodes may be disposed at both end parts in the stacking direction of the element. The positive electrode may be contained in a bag-shaped separator. In general, in order to ensure low-temperature high-rate performance, the negative electrodes are often disposed at both end parts in the stacking direction of the element.

Even when a pressure in the thickness direction is applied to the element, a gap may be present between the element and the container. For example, when the member disposed on the outermost side is the separator, the rib is present on the outer surface of the separator, and the rib faces the side wall or the partition of the container, the height of the rib of the separator is not included in the dimension of the element in the y direction. Meanwhile, when the tip of the rib is in contact with the side wall or the partition, the height of the rib regulates the dimension of the cross-sectional area Se of the electrolyte solution in the y direction. Since the rib of the separator has a certain degree of flexibility, the rib may be deformed by being pushed by the side wall or the partition. In this case, the height of the rib after deformation restricts the dimension of the cross-sectional area Se of the electrolyte solution in the y direction.

Similarly, when the dimension of the cross-sectional area Se of the electrolyte solution in the y direction is obtained, the height of the rib is not included in the dimension in the y direction when the rib is present on the side wall or the partition of the container. When both the side wall or the partition and the separator include ribs, and the tips of the ribs are in contact with the side wall or the partition, the sum of the height of the rib of the separator (the height of the rib after deformation when the rib is deformed) and the height of the rib of the side wall or the partition regulates the dimension of the cross-sectional area Se of the electrolyte solution in the y direction.

According to the above configuration, the cycle durability of the lead-acid battery used in PSOC can be remarkably improved. The reason for this is considered to be that stratification due to sedimentation of the electrolyte solution occurring during charging is suppressed, and as a result, the life is not regulated by the stratification. That is, in order to suppress the stratification, it is effective to reduce the amount of the electrolyte solution present around the lower part of the element until $Ra \leq 0.20$ is satisfied, and increase the amount of sulfuric acid held in the positive electrode until $0.3 \leq Rb$ is satisfied.

It is considered that the stratification proceeds according to the following mechanism. For example, in the positive electrode, lead sulfate is oxidized during charging to generate sulfuric acid. Next, the sulfuric acid moves inside the positive electrode up to the interface between the positive electrode and the electrolyte solution, and the sulfuric acid is released from the interface to the outside of the positive electrode. Thereafter, the sulfuric acid is precipitated by natural convection due to the density difference of the electrolyte solution.

In contrast to the above mechanism, when $Ra \leq 0.20$ is satisfied, it is considered that natural convection due to the density difference of the electrolyte solution is suppressed, and a state where the sulfuric acid generated during charging hardly settles is continued. Since the internal structure of the positive electrode is fine, the sulfuric acid is less likely to move inside the positive electrode as compared with the negative electrode and the separator. Therefore, when the occupancy of the positive electrode in the element increases as $0.3 \leq Rb$ is satisfied, the amount of the sulfuric acid released into the electrolyte solution around the element is significantly reduced. It is considered that the stratification is remarkably suppressed by suppressing the movement of the sulfuric acid in two paths of the inside and outside of the positive electrode. In order to cause the positive electrode to retain as much sulfuric acid as possible, it is desirable to increase the occupied volume of the positive electrode in a space in which the electrolyte solution can be stored as much as possible. In order to satisfy $Ra \leq 0.20$ and $0.3 \leq Rb$, for example, the dimension X of the element in the x direction may be as large as possible, and the dimension Xs of the cross-sectional area (S) of the cell chamber in the x direction may be as small as possible.

The difference $\Delta x$ between the dimension Xs of the region (cell chamber) surrounded by the inner edge of the container in the x direction and the dimension X of the element in the x direction is desirably, for example, 14 mm or less, and may be 12 mm or less. In this case, the distance from one end part of the element in the x direction to the inner edge of the container is desirably, for example, 7 mm or less, and may be 6 mm or less. $\Delta x/Xs$ is desirably 0.12 or less, and may be 0.10 or less, or 0.08 or less. In other words, in the cross section CS, the ratio of the gap ($\Delta x$) between the inner edge of the container and the element in the width direction of the element to the distance (Xs) between the inner edges of the container in the width direction of the element may be 0.12 or less, 0.10 or less, or 0.08 or less.

The difference Δy between the dimension Ys of the region (cell chamber) surrounded by the inner edge of the container in the y direction and the dimension Y of the element in the y direction is desirably, for example, 2.5 mm or less, and may be 2.0 mm or less. In this case, the distance from one end part of the element in the y direction to the inner edge of the container is desirably, for example, 1.25 mm or less, and may be 1.0 mm or less. Δy/Ys is desirably 0.07 or less, and may be 0.05 or less or 0.04 or less. In other words, in the cross section CS, the ratio of the gap (Δy) between the inner edge of the container and the element in the thickness direction of the element to the distance (Ys) between the inner edges of the container in the thickness direction of the element may be 0.07 or less, 0.05 or less, or 0.04 or less.

In particular, it is considered that the natural convection of the electrolyte solution can be effectively suppressed by reducing Δx/Xs. In particular, when Δy/Ys is limited to 0.07 or 0.06 or less, the destination of the electrolyte solution is likely to concentrate in the gap between the end part of the element having a relatively large space in the x direction and the container. When Δx/Xs is limited as described above, such movement of the electrolyte solution is also greatly limited, and thus it is considered that the stratification is more remarkably suppressed.

Fig. 1 shows an appearance of an example of a lead-acid battery according to an embodiment of the present invention. A lead-acid battery 1 includes a container 12 that stores an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 including a positive electrode terminal 16 and a negative electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is formed by alternately stacking each of a plurality of negative electrode plates 3 and each of a plurality of positive electrode plates 2 with a separator 4 interposed therebetween. The separator 4 has a bag shape, with one positive electrode plate 2 packaged in one separator 4. In the cell chamber 14 located at one end of the container 12, a positive electrode shelf 6 connecting lug parts 2a of a plurality of positive electrode plates 2 in parallel is connected to a penetrating connection body 8, and a negative electrode shelf 5 connecting lug parts 3a of a plurality of negative electrode plates 3 in parallel is connected to a negative pole 7. The negative pole 7 is connected to the negative electrode terminal 17 outside the lid 15. In the cell chamber 14 located at the other end part of the container 12, a positive pole 9 is connected to the positive electrode shelf 6, and the penetrating connection body 8 is connected to the negative electrode shelf 5. The positive pole 9 is connected to the positive electrode terminal 16 outside the lid 15. Each of the penetrating connection bodies 8 passes through a through-hole provided in the partition 13 to connect the elements 11 of the adjacent cell chambers 14 in series.

The positive electrode shelf 6 is formed by welding the lug parts 2a, provided on the upper parts of the respective positive electrode plates 2, to each other by a cast-on-strap method or a burning method. The negative electrode shelf 5 is also formed by welding the lug parts 3a, provided on the upper parts of the respective negative electrode plates 3, to each other in accordance with the case of the positive electrode shelf 6.

The lid 15 of the lead-acid battery in the illustrated example has a single structure (single lid), but is not limited thereto. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

The lead-acid battery may include a catalyst unit that includes a catalyst promoting a reaction of generating water by oxidation of hydrogen and returns the generated water to the electrolyte solution. The catalyst unit is a space communicating with a space in which the electrolyte solution is stored, and may be disposed so that at least a part of the generated water can be returned to the inside of the container or the electrolyte solution. The catalyst unit may be incorporated in the reflux structure. The catalyst unit improves the resistance to electrolyte solution decrease of the lead-acid battery used in PSOC, and improves the cycle durability.

The catalyst included in the catalyst unit promotes a reaction of generating water from hydrogen and oxygen. The catalyst unit may be a catalyst vent incorporating such a catalyst. The catalyst vent includes, for example, a catalyst and an outer container that retains hydrogen and oxygen generated in the battery and stores the catalyst. The outer container includes, for example, a supply port for supplying hydrogen and oxygen to the catalyst and a return water port for causing generated water to flow into the battery. The outer container may include an exhaust port for discharging unreacted hydrogen and oxygen to the outside. The catalyst vent may be installed as a vent plug provided for each cell chamber on the lid of the lead-acid battery. The supply port for supplying hydrogen and oxygen to the catalyst and the return water port for returning generated water into the battery may be common. That is, the supply port and the return water port are not necessarily distinguished from each other. The supply port and the return water port may be covered with a porous membrane that allows the permeation of hydrogen, oxygen, and water.

Generally, the structure of the catalyst vent is roughly classified into a bypass type and a forced ventilation type (direct coupling type). In the former, an appropriate exhaust port not directly connected to the catalyst is provided in a part of the outer container, and depending on conditions, a part of the gas generated in the battery is exhausted without coming into contact with the catalyst. This structure is suitable for autonomously limiting the reaction volume and protecting the catalyst vent from the damage of reaction heat when a large amount of gas is generated. In the latter, the gas generated in the battery necessarily comes into contact with the catalyst. This system has high gas return efficiency to water. The catalyst is not particularly limited, but a palladium catalyst supported on an alumina support, or the like is used.

In the present specification, (a) the PSOC cycle durability, (b) the corrosion amount of the positive current collector, and (c) the amount of electrolyte solution decrease are each evaluated by the following procedures.

(a) PSOC cycle durability

In an air tank at 40°C $\pm$ 3°C, in steps 1 to 10 shown in Table 2 below, the number of cycles until a voltage between terminals reaches 1.2 V per unit cell is used as the index of the PSOC cycle durability. In Table 2, CC discharge means constant current discharge, and CV charge means constant voltage charge. In the present specification, 1 CA is a current value (A) having the same numerical value as the nominal capacity (Ah) of the battery. For example, for a battery having a nominal capacity of 30 Ah, 1 CA is 30 A and 1 mCA is 30 mA.

[Table 2]

| Step | Contents | Test condition | | Air tank temperature |
|------|----------|----------------|--|----------------------|
| | | Current, voltage, and number of times of repeat | Termination condition | |
| 1 | CC discharge | 1 CA | 59 seconds | 40°C |
| 2 | CC discharge | 300 A | 1 second | |
| 3 | CV charge | 2.4 V/cell, up to 50 A | 10 seconds | |
| 4 | CC discharge | 1 CA | 5 seconds | |
| 5 | Repetition of steps 3, 4 | 5 times | - | |
| 6 | Repetition of steps 1 to 5 | 50 times | - | |
| 7 | CV charge | 2.4 V/cell, up to 50 A | 900 seconds | |
| 8 | Repetition of steps 1 to 7 | 72 times | - | |
| 9 | Pause | 15 hours | - | |
| 10 | Return to step 1 | - | - | |

(b) Corrosion amount of positive current collector

After the PSOC cycle durability test, the battery is disassembled, the positive electrode is washed with water to remove sulfuric acid, and then the positive electrode material is removed to obtain only the positive current collector. The positive current collector is immersed in an alkaline solution of mannitol for about 12 hours to remove a corrosive layer present on the surface of the positive current collector. The corrosion amount is calculated from the weight change before and after the PSOC cycle durability test.

(c) Amount of electrolyte solution decrease

After the PSOC cycle durability test, the amount of the electrolyte solution is measured. The amount of decrease in the electrolyte solution is calculated from the difference between the battery mass after formation or, as necessary, the battery mass after adjusting the specific gravity of the electrolyte solution to the reference value after formation and the battery mass after the test. The amount of decrease is divided by the number of cycles to obtain the amount of electrolyte solution decrease per cycle, which is used as the index of the amount of electrolyte solution decrease.

The lead-acid battery according to the present invention will be summarized below.

(1) A lead-acid battery (preferably a flooded-type lead-acid battery) including:

a positive electrode;
a negative electrode; and

an electrolyte solution,
wherein the positive electrode includes a positive current collector and a positive electrode material,
the negative electrode includes a negative current collector and a negative electrode material,
the positive electrode material contains lead dioxide,
the electrolyte solution contains water and sulfuric acid, and
a content of lead dioxide in the positive electrode material is 70% by mass or more and 82% by mass or less (preferably less than 80% by mass or 75% by mass or less) in a virtual full charge state where the lead-acid battery is assumed to be in a full charge state.

(2) The lead-acid battery according to the above (1), wherein the virtual full charge state is a state where a specific gravity of the electrolyte solution is a reference value.

(3) The lead-acid battery according to the above (2), wherein the specific gravity of the reference value is 1.28 at 20°C.

(4) The lead-acid battery according to any one of the above (1) to (3), wherein

when a charge state of the lead-acid battery is X (%), X (%) = 100 × W2/W4 is set,
W2 is an amount of sulfuric acid (g) actually measured in the electrolyte solution, and
W4 is an amount of sulfuric acid (g) in the electrolyte solution when a specific gravity of the electrolyte solution is the reference value.

(5) The lead-acid battery according to any one of the above (1) to (4), wherein the lead-acid battery is used in PSOC.

(6) The lead-acid battery according to the above (5), wherein the lead-acid battery is mounted on a vehicle subjected to idling stop control.

(7) The lead-acid battery according to any one of the above (1) to (6), wherein the negative electrode material contains a synthetic organic expander.

(8) The lead-acid battery according to any one of the above (1) to (7), wherein the negative electrode material contains at least one selected from the group consisting of an organic polymer compound and a fatty acid.

(9) The lead-acid battery according to any one of the above (1) to (8), wherein the organic polymer compound contains a repeating structure of oxy C2-4 alkylene units.

(10) The lead-acid battery according to any one of the above (1) to (9), wherein

the negative electrode material contains a carbonaceous material (preferably graphite), and
a content of the carbonaceous material in the negative electrode material is 0.3% by mass or more, or 0.45% by mass or more.

(11) The lead-acid battery according to any one of the above (1) to (10), wherein

the positive electrode material contains antimony, and
a content of the antimony in the positive electrode material is 0.01% by mass or more, or 0.03% by mass or more.

(12) The lead-acid battery according to any one of the above (1) to (11), wherein

the positive current collector contains tin, and
a content of the tin in the positive current collector is 0.95% by mass or more.

(13) The lead-acid battery according to any one of the above (1) to (12), wherein

the lead-acid battery includes a container that stores an element and the electrolyte solution,
the element includes the positive electrode, the negative electrode, and a separator interposed between the positive electrode and the negative electrode, and
a ratio of an area of an orthographic projection image of the electrolyte solution on a plane (projection plane) present outside an outer edge of an orthographic projection image of the element to an area of the orthographic projection image of the element on the plane parallel to the bottom part of the container is 0.2 or less (preferably 0.05 or more and 0.18 or less).

(13-2) A lead-acid battery including a container that sores an element and an electrolyte solution, wherein

the element includes a positive electrode, a negative electrode, and a separator, and
in a cross section parallel to a bottom part of the container of the lead-acid battery, a ratio Ra of a cross-

19

sectional area of the electrolyte solution present outside an outer edge of the element to a cross-sectional area of the element is 0.20 or less.

(13-3) The lead-acid battery according to the above (13-2), wherein a ratio Rb of a cross-sectional area of the positive electrode to an area of a region surrounded by an inner edge of the container is 0.3 or more.

(13-4) The lead-acid battery according to the above (13-2) to (13-3), wherein in the cross section, a ratio $\Delta x/X$ of a gap ($\Delta x$) between an inner edge of the container and the element in a width direction of the element to a distance (X) between inner edges of the container in the width direction of the element is 0.12 or less, and a ratio $\Delta y/Y$ of a gap ($\Delta y$) between an inner edge of the container and the element in a thickness direction of the element to a distance (Y) between inner edges of the container in the thickness direction of the element is 0.07 or less.

(13-5) The lead-acid battery according to the above (13-2) to (13-4), wherein in the cross section, an area S1 surrounded by an inner edge of the container in the cross section of the lead-acid battery at a height of 2 cm from a back surface of the bottom part of the container, an area S2 surrounded by an inner edge of the container in the cross section of the lead-acid battery at a depth of 2 cm from a liquid level of the container, and an area S3 surrounded by an inner edge of the container in the cross section of the lead-acid battery at an intermediate depth of the liquid level of the container is substantially the same.

(14) The lead-acid battery according to the above (13), wherein a ratio of an area of an orthographic projection image of the positive electrode on the projection plane to an area of a region surrounded by an outer edge of the orthographic projection image of the electrolyte solution on the projection plane is 0.3 or more (preferably 0.32 or more and 0.45 or less).

(15) The lead-acid battery according to any one of the above (1) to (14), further including a catalyst unit that includes a catalyst promoting a reaction of generating water by the oxidation of hydrogen and returns the generated water to the electrolyte solution.

(16) A method for producing a lead-acid battery, the method including:

assembling an unformed cell including a positive electrode, a negative electrode, and an electrolyte solution; and forming the unformed cell,

wherein the positive electrode includes a positive current collector and a paste-type positive electrode material, the positive electrode material contains lead dioxide,

the electrolyte solution contains water and sulfuric acid, and

a content of lead dioxide in the positive electrode material after the forming is 70% by mass or more and 82% by mass or less (preferably less than 80% by mass or 75% by mass or less).

(17) The method for producing a lead-acid battery according to the above (16), further including adjusting a specific gravity of the electrolyte solution to a reference value when the specific gravity of the electrolyte solution after the forming is not in a state of the reference value.

(18) A method for using the lead-acid battery according to the above (1), the method including charging and discharging the lead-acid battery mounted on a vehicle subjected to idling stop control in PSOC.

EXAMPLES

Hereinafter, the present invention will be specifically described based on Examples and Comparative Examples, but the present invention is not limited to the following Examples.

<<Lead-acid batteries A1 to A4 and R1 to R3>>

(1) Preparation of lead-acid battery

(a) Preparation of negative electrode

A lead powder as a raw material, lignin (specifically, sodium lignin sulfonate) (organic expander), barium sulfate, and carbon black are mixed with an appropriate amount of an aqueous sulfuric acid solution to obtain a negative electrode paste. The respective components are mixed so that the content of sodium lignin sulfonate in the negative electrode material is 0.1% by mass, the content of barium sulfate is 0.4% by mass, and the content of carbon black is 0.2% by mass, all of which are determined by the procedures described above. The concentration and amount of the aqueous sulfuric acid solution are adjusted so that the density of the negative electrode material contained in a lead-acid battery in a full charge state after formation is 3.6 g/cm$^3$. The negative electrode paste is filled in a mesh part of an expanded grid (Sn content:

1.0% by mass) made of a Pb-Ca-Sn alloy which is a negative current collector, and cured and dried to obtain an unformed negative electrode.

(b) Preparation of positive electrode

A lead powder as a raw material is mixed with an aqueous sulfuric acid solution to obtain a positive electrode paste. The positive electrode paste is filled in a mesh part of an expanded grid (Sn content: 1.2% by mass) made of a Pb-Ca-Sn alloy which is a positive current collector, and cured and dried to obtain an unformed positive electrode.

(c) Preparation of test battery

A test battery has a rated voltage of 2 V/cell and a rated 20-hour rate capacity of 60 Ah. An element of the test battery includes seven positive electrode plates and eight negative electrode plates, the positive electrode plates being stored in a bag-shaped separator. As the bag-shaped separator, a bag-shaped separator formed of a polyethylene microporous membrane is used. The element is stored in a container made of polypropylene together with an electrolyte solution (aqueous sulfuric acid solution).

Next, formation is performed in the container so that the content of lead dioxide in a positive electrode material after formation, which is determined by the same procedure as in the case of determining the content x3 of lead dioxide ($PbO_2$) in a positive electrode material PMx, has values shown in Table 3, thereby preparing a flooded-type lead-acid battery. Here, the content of lead dioxide is changed by a method for adjusting the amount of charge during the formation. Thereafter, the specific gravity of the electrolyte solution at 20°C is adjusted to 1.28, and lead-acid batteries A1 to A4 and B1 to B3 for testing are completed. The lead-acid batteries A1 to A4 correspond to Examples 1 to 4, and the lead-acid batteries B1 to B3 correspond to Comparative Examples 1 to 3.

Here, a ratio $R_{L/G}$ of the area of the orthographic projection image of the electrolyte solution present outside the outer edge of the orthographic projection image of the element on the projection plane to the area of the orthographic projection image of the element on the projection plane (the ratio Ra of the cross-sectional area of the electrolyte solution present outside the outer edge to the cross-sectional area of the element) is set to 0.17, and a ratio $R_{P/L}$ of the area of the orthographic projection image of the positive electrode on the projection plane to an area of the region surrounded by the outer edge of the orthographic projection image of the electrolyte solution on the projection plane (the ratio Rb of the cross-sectional area of the positive electrode to the area of the region surrounded by the inner edge of the container) is set to 0.30.

(2) Evaluation

In the procedures described above, (a) the PSOC cycle durability, (b) the corrosion amount of the positive current collector, and (c) the amount of electrolyte solution decrease are evaluated. The results of each lead-acid battery are shown in Table 3 as relative values (%) when the numerical values of the results of the lead-acid battery B 1 are 100%. The larger the numerical value, the more excellent the PSOC cycle durability, and the smaller the numerical values, the more excellent the corrosion amount of the positive current collector and amount of electrolyte solution decrease.

[Table 3]

|  | $PbO_2$ content [%] | Corrosion amount [%] | Amount of electrolyte solution decrease [%] | Cycle durability [%] |
|---|---|---|---|---|
| B1 | 95 | 100 | 100 | 100 |
| A1 | 70 | 84 | 86 | 109 |
| A2 | 75 | 82 | 84 | 111 |
| A3 | 80 | 84 | 82 | 110 |
| A4 | 82 | 86 | 88 | 112 |
| B2 | 90 | 95 | 96 | 103 |
| B3 | 65 | 84 | 84 | 80 |

<<Lead-acid batteries A5 to A8>>

Lead-acid batteries A5 to A8 of Example 5 to 8 are prepared and evaluated in the same manner as the lead-acid battery A3 except that an organic expander and an additive shown in Table 4 are used in the preparation of the negative electrode. The content of the organic expander in the negative electrode material determined by the procedures described above is set to 0.1% by mass, and the content of the additive (organic polymer compound or fatty acid) is set to 500 ppm. In Table 4, PPG is polypropylene glycol, the number average molecular weight Mn is 1500, and a peak is observed in a chemical shift range of 3.2 to 3.8 ppm in the $^1$H-NMR spectrum of PPG. The results of each battery are shown in Table 4 as relative values (%) when the numerical values of the results of the lead-acid battery B1 are 100%.

[Table 4]

|  | PbO$_2$ content [%] | Organic expander | Additive | Corrosion amount [%] | Amount of electrolyte solution decrease [%] | Cycle durability [%] |
|---|---|---|---|---|---|---|
| A5 | 80 | Condensate of bisphenols | None | 83 | 86 | 117 |
| A6 | 80 | Lignin | PPG | 79 | 75 | 113 |
| A7 | 80 | Lignin | Oleic acid | 78 | 76 | 112 |
| A8 | 80 | Condensate of bisphenols | PPG | 80 | 78 | 121 |

<<Lead-acid battery A9>>

In the production of the positive electrode, antimony trioxide is added to the positive electrode paste so that the content of antimony in the positive electrode material determined by the procedures described above is 0.05% by mass. The content of Sn in an expanded grid made of a Pb-Ca-Sn alloy which is a positive current collector is set to 1.3% by mass. In the production of the negative electrode, the content of carbon black in the negative electrode material determined by the procedures described above is set to 1.3% by mass. The ratio Ra of the cross-sectional area of the electrolyte solution present outside the outer edge of the element to the cross-sectional area of the element (the ratio $R_{L/G}$ of the area of the orthographic projection image of the electrolyte solution present outside the outer edge of the orthographic projection image of the element on the projection plane of the element to the area of the orthographic projection image of the element on the projection plane) is set to 0.13, and the ratio Rb of the cross-sectional area of the positive electrode to the area of the region surrounded by the inner edge of the container (the ratio $R_{P/L}$ of the area of the orthographic projection image on the projection plane of the positive electrode to the area of the region surrounded by the outer edge of the orthographic projection image on the projection plane of the electrolyte solution) is set to 0.36. Except the above, a lead-acid battery A9 of Example 9 is produced and evaluated in the same manner as in the lead-acid battery A3. The results are shown in Table 5 as relative values (%) when the numerical values of the results of the lead-acid battery B 1 are 100%.

[Table 5]

|  | PbO$_2$ content [%] | Corrosion amount [%] | Amount of electrolyte solution decrease [%] | Cycle durability [%] |
|---|---|---|---|---|
| A9 | 80 | 78 | 65 | 131 |

The lead-acid battery A9 has an area ratio Ra of 0.13 and a ratio Rb of 0.36, and has a structure in which the stratification of the electrolyte solution is remarkably suppressed. Therefore, the effect of improving the cycle durability by controlling the content of lead dioxide in the positive electrode material in the full charge state to 80% by mass is remarkably exhibited. The corrosion amount of the positive current collector and the electrolyte solution decrease are also remarkably suppressed. From the above, it can be said that the ratio Rb desirably exceeds 0.3, and is desirably 0.33 or more, and more desirably 0.35 or more.

INDUSTRIAL APPLICABILITY

The lead-acid battery according to the present invention is suitable for use in an idling stop vehicle as, for example, a lead-acid battery for IS that is charged and discharged under PSOC conditions. The lead-acid battery can be suitably used as, for example, a power source for starting a vehicle (automobiles, motorcycles, or the like), an industrial energy storage apparatus (for example, a power source of an electric vehicle (such as forklift) or the like), and the like. Note that these applications are merely illustrative and not limited to these applications.

DESCRIPTION OF REFERENCE SIGNS

1: lead-acid battery
2: positive electrode plate
2a: lug part
3: negative electrode plate
3a: lug part
4: separator
5: negative electrode shelf
6: positive electrode shelf
7: negative pole
8: penetrating connection body
9: positive pole
11: element
12: container
13: partition
14: cell chamber
15: lid
16: positive electrode terminal
17: negative electrode terminal
18: vent plug

**Claims**

1. A lead-acid battery comprising:

    a positive electrode;
    a negative electrode; and
    an electrolyte solution,
    wherein the positive electrode includes a positive current collector and a positive electrode material,
    the negative electrode includes a negative current collector and a negative electrode material,
    the positive electrode material contains lead dioxide,
    the electrolyte solution contains water and sulfuric acid, and
    a content of lead dioxide in the positive electrode material is 70% by mass or more and 82% by mass or less in a virtual full charge state where the lead-acid battery is assumed to be in a full charge state.

2. The lead-acid battery according to claim 1, wherein the virtual full charge state is a state where a specific gravity of the electrolyte solution is a reference value.

3. The lead-acid battery according to claim 2, wherein the specific gravity of the reference value is 1.28 at 20°C.

4. The lead-acid battery according to any one of claims 1 to 3, wherein

    when a charge state of the lead-acid battery is X (%), X (%) = 100 × W2/W4 is set,
    W2 is an amount of sulfuric acid (g) actually measured in the electrolyte solution, and
    W4 is an amount of sulfuric acid (g) in the electrolyte solution when a specific gravity of the electrolyte solution is the reference value.

5. The lead-acid battery according to any one of claims 1 to 3, wherein the lead-acid battery is used in PSOC.

6. The lead-acid battery according to claim 5, wherein the lead-acid battery is mounted on a vehicle subjected to idling stop control.

7. The lead-acid battery according to any one of claims 1 to 3, wherein the negative electrode material contains a synthetic organic expander.

8. The lead-acid battery according to any one of claims 1 to 3, wherein the negative electrode material contains at least one selected from the group consisting of an organic polymer compound and a fatty acid.

9. The lead-acid battery according to any one of claims 1 to 3, wherein the organic polymer compound contains a repeating structure of oxy C2-4 alkylene units.

10. The lead-acid battery according to any one of claims 1 to 3, wherein

    the negative electrode material contains a carbonaceous material, and
    a content of the carbonaceous material in the negative electrode material is 0.45% by mass or more.

11. The lead-acid battery according to any one of claims 1 to 3, wherein

    the positive electrode material contains antimony, and
    a content of the antimony in the positive electrode material is 0.03% by mass or more.

12. The lead-acid battery according to any one of claims 1 to 3, wherein

    the positive current collector contains tin, and
    a content of the tin in the positive current collector is 0.95% by mass or more.

13. The lead-acid battery according to any one of claims 1 to 3, wherein

    the lead-acid battery includes a container that stores an element and the electrolyte solution,
    the element includes the positive electrode, the negative electrode, and a separator interposed between the positive electrode and the negative electrode, and
    in a cross section parallel to a bottom part of the container of the lead-acid battery, a ratio Ra of a cross-sectional area of the electrolyte solution present outside an outer edge of the element to a cross-sectional area of the element is 0.2 or less.

14. The lead-acid battery according to claim 13, wherein a ratio Rb of a cross-sectional area of the positive electrode to an area of a region surrounded by an inner edge of the container is 0.3 or more.

15. The lead-acid battery according to any one of claims 1 to 3, further comprising a catalyst unit that includes a catalyst promoting a reaction of generating water by oxidation of hydrogen and returns the generated water to the electrolyte solution.

16. A method for producing a lead-acid battery, the method comprising :

    assembling an unformed cell including a positive electrode, a negative electrode, and an electrolyte solution; and
    forming the unformed cell,
    wherein the positive electrode includes a positive current collector and a paste-type positive electrode material,
    the positive electrode material contains lead dioxide,
    the electrolyte solution contains water and sulfuric acid, and
    a content of lead dioxide in the positive electrode material after the forming is 70% by mass or more and 82% by mass or less.

17. The method for producing a lead-acid battery according to claim 16, further comprising adjusting a specific gravity of the electrolyte solution to a reference value when the specific gravity of the electrolyte solution after the forming is not in a state of the reference value.

18. A method for using the lead-acid battery according to claim 1, the method comprising charging and discharging the lead-acid battery mounted on a vehicle subjected to idling stop control in PSOC.

19. The lead-acid battery according to any one of claims 1 to 3, wherein a content of lead dioxide in the positive electrode material is 70% by mass or more and less than 80% by mass in a virtual full charge state where the lead-acid battery is assumed to be in a full charge state.

20. The lead-acid battery according to any one of claims 1 to 3, wherein a content of lead dioxide in the positive electrode material is 70% by mass or more and 75% by mass or less in a virtual full charge state where the lead-acid battery is assumed to be in a full charge state.

Fig. 1

## INTERNATIONAL SEARCH REPORT

| International application No. |
| --- |
| **PCT/JP2023/015844** |

**A. CLASSIFICATION OF SUBJECT MATTER**

*H01M 10/06*(2006.01)i; *H01M 4/14*(2006.01)i; *H01M 4/62*(2006.01)i; *H01M 4/68*(2006.01)i; *H01M 10/12*(2006.01)i
FI: H01M10/06 Z; H01M4/14 Q; H01M4/62 B; H01M4/68 A; H01M10/12 Z

According to International Patent Classification (IPC) or to both national classification and IPC

**B. FIELDS SEARCHED**

Minimum documentation searched (classification system followed by classification symbols)

H01M10/06; H01M4/14; H01M4/62; H01M4/68; H01M10/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2021-99920 A (GS YUASA INTERNATIONAL LTD.) 01 July 2021 (2021-07-01) claims 1, 6, paragraphs [0043], [0079], [0080], [0095], [0111], [0116]-[0118] | 1-4, 7-17, 19, 20 |
| A | | 5, 6, 18 |
| A | JP 2018-18803 A (GS YUASA INTERNATIONAL LTD.) 01 February 2018 (2018-02-01) entire text, all drawings | 1-20 |
| A | JP 2022-9931 A (GS YUASA INTERNATIONAL LTD.) 14 January 2022 (2022-01-14) entire text, all drawings | 1-20 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 June 2023** | **04 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/015844**

| Patent document<br>cited in search report | | | Publication date<br>(day/month/year) | Patent family member(s) | Publication date<br>(day/month/year) |
|---|---|---|---|---|---|
| JP | 2021-99920 | A | 01 July 2021 | (Family: none) | |
| JP | 2018-18803 | A | 01 February 2018 | (Family: none) | |
| JP | 2022-9931 | A | 14 January 2022 | (Family: none) | |

Form PCT/ISA/210 (patent family annex) (January 2015)

**REFERENCES CITED IN THE DESCRIPTION**

**Patent documents cited in the description**

- WO 2018155422 A
- JP 2004171983 A
- JP 2020102359 A
- WO 201977657 A
- JP 10208746 A

**Non-patent literature cited in the description**

- Sulfuric Acid Handbook Revised Second Edition. 12 December 2012